# EUROPEAN PATENT SPECIFICATION

(11) **EP 0 592 090 B1**
(45) Date of publication and mention of the grant of the patent: **02.01.1997**
(21) Application number: 93306538.5
(22) Date of filing: 18.08.1993
(51) Int. Cl.: E05B 73/00

(54) **Security mechanism for portable computer**
Sicherheitsmechanismus für tragbaren Rechner
Mécanisme de sécurité pour ordinateur portable

(30) Priority: 16.09.1992 JP 246292/92
(43) Date of publication of application: 13.04.1994
(73) Proprietor: International Business Machines Corporation, Armonk, N.Y. 10504 (US)
(72) Inventor: Ohtani, Tetsuya, Yokohama-shi, Kanagawa-ken (JP); Uchiyama, Yoshiharu, Isehara-shi, Kanagawa-ken (JP); Nomura, Hideo, Yokohama-shi, Kanagawa-ken (JP)
(74) Representative: Burt, Roger James, Dr.

(56) References cited:
- EP-A- 0 430 250
- US-A- 4 843 848
- US-A- 5 154 456

## Description

### Field of the Invention

The present invention mainly relates to a portable type of information processing apparatus, and more particularly to a security mechanism for a detachable unit such as a cartridge type of disk storage unit or solid state file (SSF) storage unit to be installed in an information processing apparatus.

### Background Art

A cartridge type of hard disk drive (HDD) unit which is easy to mount or remove for a user is widely used, but no locking mechanism is yet known for restricting the freedom of removing such a detachable HDD from an information processing apparatus for the purpose of protecting information in the HDD. Moreover, in such an easy to carry information processing apparatus as a notebook personal computer, the information processing apparatus may be engaged, through a chain or the like, with an external fixed location for the purpose of restraining the information processing apparatus itself from being freely moved. However, a conventional structure for connecting a chain or the like to the information processing apparatus has no relation to a structure for locking a HDD in the information processing apparatus.

US Patent 4,843,848 discloses a fixture for securing office equipment in which an adhesive plate is bonded to the equipment. A belt that surrounds the equipment and protects the adhesive plate is used. A securing device is used to secure the adhesive plate and the belt to a fixed location.

An object of the present invention is to provide an information processing apparatus in which a unit such as a HDD or the like can be inhibited from being detached from the information processing apparatus when the information processing apparatus itself is engaged with an external fixed location, while it can be easily detached from the information processing apparatus when the information processing apparatus is not engaged in such a way.

### Disclosure of the Invention

To attain said object, the present invention provides an information processing apparatus having a security device, comprising a body, wherein said body includes an aperture for receiving a removable device (for example, a storage unit such as a cartridge HDD or FDD, a cartridge IC memory, a card memory, or the like, a battery pack, a communication instrument, etc.); and a movable member operable from outside said body, movable between first and second positions, said movable member including a hole within a portion of said movable member for receiving an extraneous securing device; characterised in that the apparatus further comprises a cover removably mounted over said aperture for closing an ejecting section for removing said removable device from said body; and wherein said movable member allows said cover to be opened when said movable member is at a first position and inhibits said cover from being opened when said movable member is at a second position, said hole in said movable member being located such that if an extraneous securing device is received therein when said movable member is in said second position then said movable member is prevented from releasing said removable cover as a result of being prevented from moving to said first position.

### Brief Description of the Drawings

FIG.1 is a perspective view showing a schematic construction of an embodiment of an information processing apparatus according to the present invention in the state that a lid is opened;
FIG.2 is a perspective bottom view of the apparatus of fig. 1 shown with the lid closed;
FIG.3 is a perspective bottom view of the apparatus of fig. 1 showing the enlarged neighborhood of a slider such that the slider is at a second position;
FIG.4 is a perspective bottom view of the apparatus of fig. 1 showing the enlarged neighborhood of the slider such that the slider is at the third position.
FIG.5 is a perspective bottom view of the apparatus of fig. 1 showing the enlarged neighborhood of the slider such that the slider is at the first position.
FIG.6 is a decomposed perspective view showing a construction of the enlarged main part of the apparatus of fig. 1;
FIG.7 is an enlarged perspective view showing a cover and the slider of the apparatus of fig. 1 attached to the body;
FIG.8 is a decomposed perspective view showing an enlarged internal construction of the neighborhood of a plate of the apparatus of fig. 1 such that the plate is at the first position;
FIG.9 is a decomposed perspective view showing an enlarged internal construction of the neighborhood of the plate of the apparatus of fig. 1 such that the plate is at the third position;
FIG. 10 is a decomposed perspective view showing an enlarged internal construction of the neighborhood of the plate of the apparatus of fig. 1 such that the plate is at the second position;
FIG. 11 is an enlarged decomposed perspective bottom view showing the removal of the cover of the apparatus of fig. 1;
FIG. 12 is an enlarged decomposed perspective bottom view showing the insertion of a cartridge HDD into the apparatus of fig. 1.

### Detailed Description of the Invention

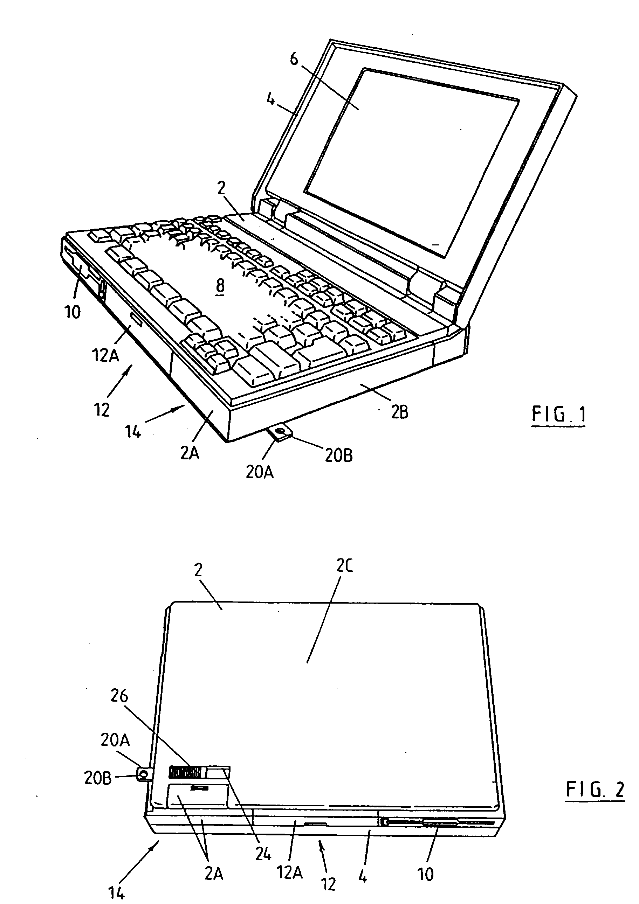

FIG.1 shows the schematic construction of an embodiment where the information processing apparatus of the present invention is a portable type of notebook personal computer. In the figure, a body 2 is formed into a flat box and includes a nonremovable unit such as a system board (not shown) for information processing. Rotatably attached to the rear edges of the body 2 is a lid 4 and provided on the inside surface of the lid 4 is a flat panel display 6. Provided on the top surface of the body 2 is a keyboard 8. Arranged from left to right in the figure along the front edge of the body 2 are a floppy disk drive (FDD) 10, a battery 12, and a hard disk drive (HDD) 14.

The FDD 10 is prevented from being detached by a user from the body 2. The battery 12 can be pulled out of the front end of the body 2 and easily replaced with a new one. An edge 12A itself at the front end of the battery 12 is formed into part of an edge at the front end of the body 2. The HDD 14 is a cartridge type and can be easily detached by the user from the body 2. The HDD 14 is enclosed in an enclosure section inside the body 2. The enclosure section is covered with a cover 2A so that the HDD 14 is not exposed outside of the body 2. The cover 2A is also formed into part of the edge at the front end of the body 2.

An edge on the right side of the body 2 in the figure is composed of a side plate 2B. From the side plate 2B, an engaging member 20A protrudes at a predetermined position of the bottom end on its front side. Provided in the engaging member 20A is a hole 20B. By connecting one end of a chain (not shown) or the like, the other end of which is connected to an external fixed location, to the hole 20B, the body 2 is inhibited from freely moving.

FIG.2 shows the lid 4 closed and said embodiment is placed bottom up. Referring to the figure, formed on a bottom surface 2C of the body 2 is an opening 24 for a slider. The slider opening 24 is provided near the cover 2A and extends in the horizontal direction of the figure. Fitted into the slider opening 24 is a slider 26. The slider 26 can freely slide in the longitudinal direction of the slider opening 24, that is, in the horizontal direction of the figure. The slider opening 24 is covered with the slider 26 regardless of the position of the slider 26 so that the inside of the body 2 cannot be connected, through the slider opening 24, with its outside.

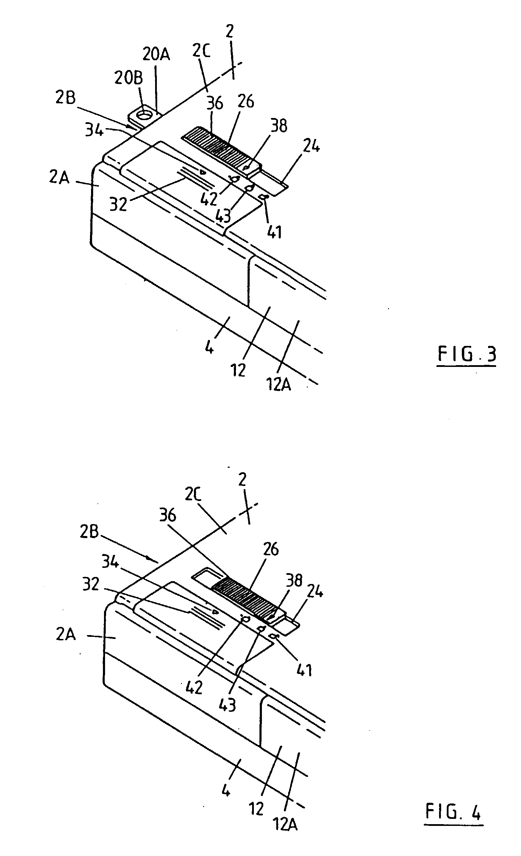

FIG.3 to FIG.5 each show an enlarged part of the cover 2A and the slider 26 on the bottom surface 2C. Referring to the figures, the cover 2A has a shape into which a flat plate is folded at a right angle in the middle of the plate, and one and the other folded pieces of the cover 2A form part of the front end of the body 2 and part of the bottom surface 2C of the body 2, respectively. Formed on the surface of one piece of the cover 2A, which forms part of the bottom surface 2C, are a nonskid machining section 32 and an arrow 34. The cover 2A can be taken down by pulling it out of the body 2, through the nonskid machining section 32 provided for the ease of pulling the cover 2A and following the indication of the arrow 34 that the cover 2A can be taken down by pulling it out of the body 2.

Formed on the surface of the slider 26 are a nonskid machining section 36 and an arrow 38. Put near the slider 26 on the bottom surface 2C in the direction of sliding of the slider 26, are a first, a second, and a third marks 41, 42, and 43. The first mark 41 is, of the three marks 41, 42, and 43, furthest from the side plate 2B of the body 2. The second mark 42 is, of the three marks 41, 42, and 43, nearest to the side plate 2B of the body 2. The third mark 43 is between the first mark 41 and the second mark 42.

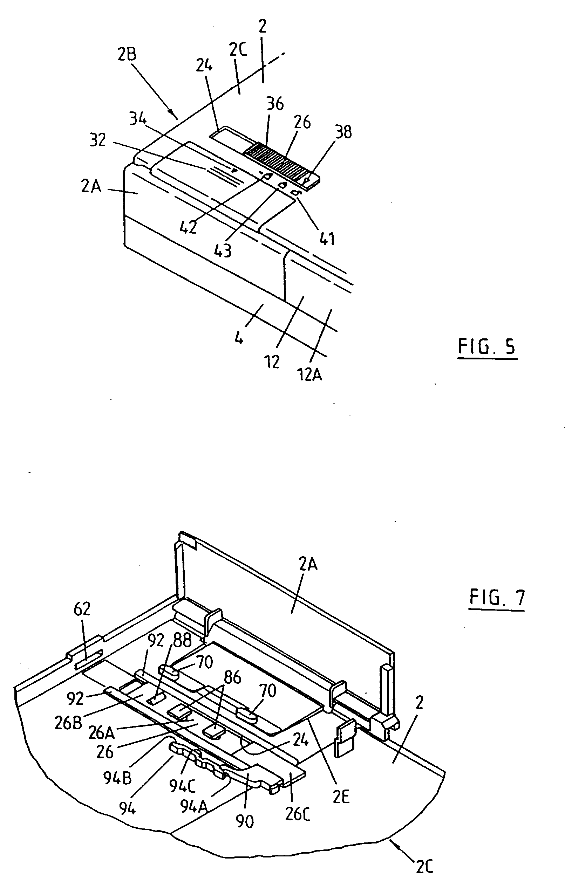

When the slider 26 is positioned as shown in FIG.5, the arrow 38 of the slider 26 indicates the first mark 41. This position of the slider 26 is referred to as the first position. When the slider 26 is at the first position, the cover 2A can be removed from the body 2. In this position, the engaging member 20A withdraws into the body 2.

When the slider 26 is positioned as shown in FIG. 3, the arrow 38 of the slider 26 indicates the second mark 42. This position of the slider 26 is referred to as the second position. When the slider 26 is at the second position, the cover 2A cannot be removed from the body 2. In this position, the engaging member 20A protrudes from the body 2. As described later, the slider 26 is fixed to the engaging member 20A. Therefore, if the engaging member 20A is inhibited from withdrawing into the body 2 by connecting, for example, a chain (not shown) to the hole 20B in the engaging member 20A, the slider 26 is prevented from being moved from the second position. In other words, the cover 2A is inhibited from being removed from the body 2 by sliding the slider 26 to the first position.

When the slider 26 is positioned as shown in FIG.4, the arrow 38 of the slider 26 indicates the third mark 43. This position of the slider 26 is referred to as a third position. When the slider 26 is at the third position, the cover 2A cannot be removed from the body 2. However, in this case, the engaging mean 20A withdraws into the body differently from the case where the slider 26 is at the second position. Therefore, it is impossible to prevent the slider 26 from moving by connecting, for example, a chain to the hole 20B in the engaging mean 20A. In other words, the cover 2A can be removed from the body 2 by sliding the slider 26 to the first position.

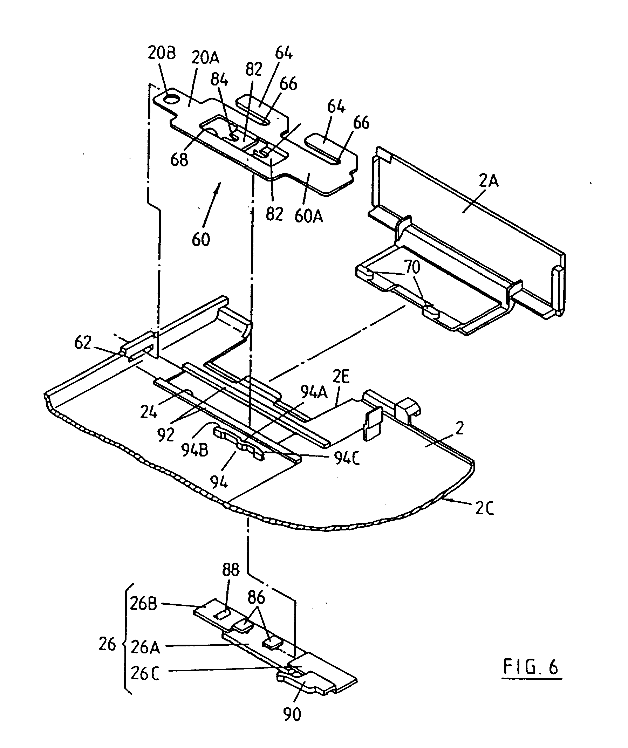

FIG.6 shows the decomposed main part of the embodiment. The side plate 2B is removed from the body 2 and not shown in the figure. The cover 2A is removed from an opening 2E for a HDD in the body 2 and shown in the figure. A plate 60 as a movable member is preferably made of a metallic plate or a plate of the same strength as the metallic plate. At one end of the plate 60 in the direction of its movement the engaging member 20A is formed from a single piece of the plate 60. In the body 2 a through hole 62 is formed. The through hole 62 connects between the inside and the outside of the body 2. The engaging member 20A is inserted into the through hole 62. The through hole 62 is larger than the engaging member 20A itself, but smaller than the engaging member 20A including an attached chain or the like. That is, if a chain or the like is attached, the engaging member 20A cannot be inserted into the slot 62.

At the other end of the plate 60, arms 64 are formed and slots 66 are formed between the arm 64 and a body 60A of the plate 60. On the other hand, on the cover 2A a protuberance 70 is formed. The protuberance 70 is slidably inserted into the slot 66, but released from the slot 66 at some position of the plate 60. Two arms 64, slots 66, and protuberances are preferably provided.

Formed in the body 60A of the plate 60 is an opening 68 for fitting, and formed in the fitting opening 68 are slider fitting sections 82. Formed in each of the slider fitting sections 82 is a slider fitting notch section 84 to which a protuberance 86 for attaching the slider 26 is to be attached. The top end of the protuberance 86 is widened so as to prevent it from coming off the slider fitting notch section 84. On the slider 26 a stopper 88 is formed. The stopper 88 contacts one end of the fitting opening 68 for attaching so as to prevent the slider attaching protuberance 86 from coming off the slider fitting notch section 84 by restricting the movement of the slider 26 relative to the plate 60 after the slider attaching protuberance 86 is fitted in the slider fitting notch section 84.

The slider 26 is preferably made of plastic material. The slider 26 is composed of the body 26A and end sections 26B and 26C at both ends of the body 26A. The width of the body 26A of the slider 26 is larger than that of the slider opening 24 of the bottom surface 2C of the body 2, and therefore the slider 26 cannot be fitted in the slider opening 24 unless it slants into the opening 24. The widths of the end sections 26B and 26C of the slider 26 are slightly smaller than the width of the slider opening 24 so that it can slide in the opening 24.

On both edges of the slider opening 24 on the inside of the bottom surface 2C rails 92 are formed. The end sections 26A and 26B of the slider 26 are slidably caught between two rails 92 so that the slider 26 can be guided by the rails 92. The width of the body 26A of the slider 26 is larger than a distance between two rails 92 so that the slider 26 is prevented from coming off and falling to the inside of the body 2. The end section 26C of the slider 26 contacts a spring 90. Fixed to the inside of the bottom surface 2C is a stopper 94.

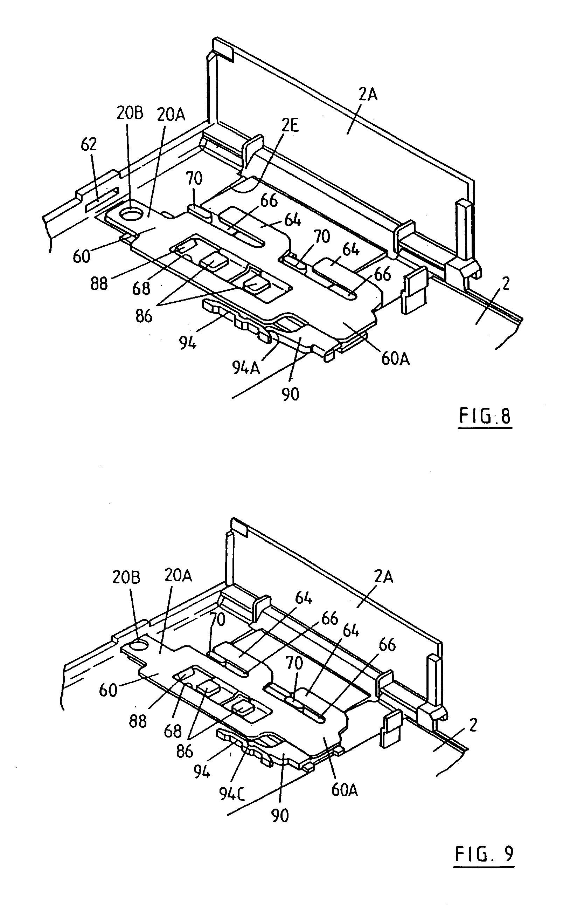

FIG.7 shows the slider 26 fitted in the slider opening 24 and the cover 2A is attached to the HDD ejecting section 2E. The plate 60, which is a movable member, is removed from the slider 26. The cover 2A is fitted in the HDD ejecting section 2E when the edges of the cover 2A are detachably engaged with those of the HDD ejecting section 2E. The cover 2A can be removed from the HDD ejecting section 2E by pulling it to the right in the figure.

As the slider 26 slides along the rail 92, the top end of the spring 90 slides on the stopper 94 accordingly. Formed on the stopper 94 are three concavities 94A, 94B, and 94C arranged in the direction of movement of the slider 26. When the slider 26 slides and the top end of the spring 90 reaches the concavities 94A, 94B, or 94C accordingly, the above top end engages with any of the concavities 94A, 94B, and 94C, the top end being able to go freely out of it, thereby the slider 26 stops sliding. That is, the slider 26 stops with a click when it slides to any of those positions.

FIG.8 shows the plate 60, as a movable member, in its first position. This corresponds to the slider position shown in FIG.5. The engaging member 20A retracts from the through hole inside of the body 2. The top end of the spring 90 engages with the first concavity 94A of the stopper 94 and the slider 26, that is, the plate 60 stably stops at the first position. The protuberances 70 of the cover 2A are released from the slots 66 of the plate 60. Therefore, the cover 2A can be removed from the HDD ejecting section 2E. That is, a HDD can be taken out of the body 2.

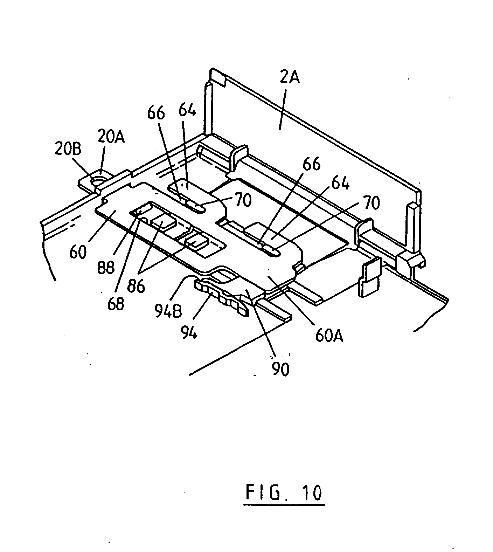

FIG.9 shows the plate 60, as a movable member, in its third position. This corresponds to the slider position shown in FIG.4. The engaging member 20A retracts from the through hole 62 and is not on the outside of the body 2. The top end of the spring 90 engages with the third concavity 94C of the stopper 94 and the slider 26, that is, the plate 60 stably stops at the third position. The protuberances 70 of the cover 2A are in the slots 66 and the cover 2A is locked by the plate 60. Therefore, the cover 2A cannot be removed from the HDD ejecting section 2E. That is, a HDD cannot be taken out of the body 2. However, since a chain or the like cannot be attached to the engaging member 20A in this state, the plate 60 can be moved to the first position (as shown in FIG.8) by operating the slider 26.

FIG. 10 shows the plate 60, as a movable member, in its second position. This corresponds to the slider position shown in FIG. 3. The engaging member 20A protrudes from the through hole 62 to the outside of the body 2. The top end of the spring 90 engages with the second concavity 94B of the stopper 94 and the slider 26, that is, the plate 60 stably stops at the second position. The protuberances 70 of the cover 2A are in the slots 66 of the plate 60 and the cover 2A is locked by the plate 60. Therefore, the cover 2A cannot be removed from the HDD ejecting section 2E. That is, a HDD cannot be taken out of the body 2. If a chain or the like is attached to the engaging member 20A protruding from the body 2, the plate 60 is prevented from being moved to the first position (as shown in FIG. 8) by operating the slider 26. Therefore, if a chain or the like is attached to the engaging member 20A protruding from the body 2, not only the body 2 is prevented from moving, but also a HDD is inhibited from being detached from the body 2.

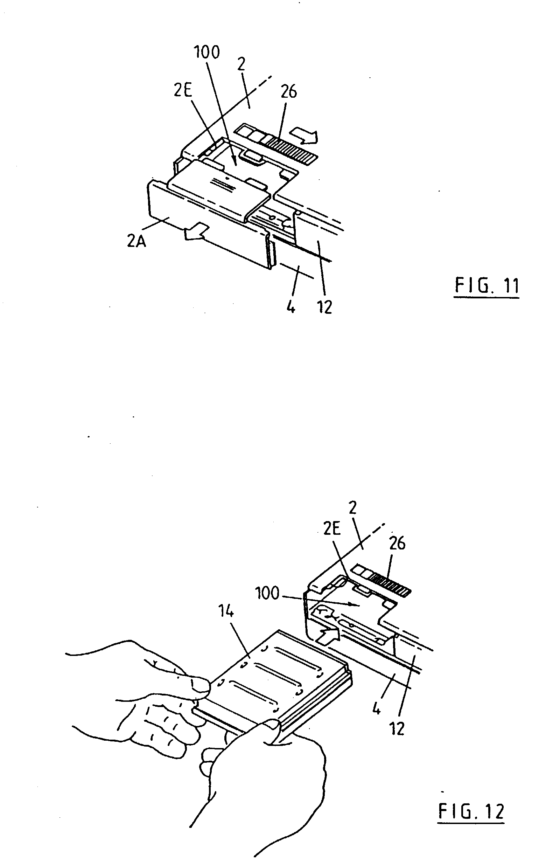

FIG. 11 shows the body 2 placed bottom up, the slider 26 is moved to the right in the figure, that is, to the first position, and then the cover 2A is removed from the HDD ejecting section 2E of the body 2. After the cover 2A is removed, the enclosure section 100 for a HDD is exposed in the HDD ejecting 2E. FIG. 12 shows the insertion of the cartridge HDD 14 into the enclosure section 100 within the body 2. It is preferable that the enclosure section 100 is provided with guide rails (not shown) for guiding and holding the HDD 14.

After the HDD 14 is enclosed in the enclosure section 100 and the connector of the HDD 14 is engaged with that of the system body, the cover 2A is attached to the HDD ejecting section 2E. Then, when the slider 26 slides to the position shown in FIG.2 (second position), the engaging member 20A protrudes from the body 2 so that a chain or the like can be attached to the engaging member 20A. The chain causes not only the slider 26 to be locked at the second position, but also the cover 2A to be locked in the body 2.

As described above, the embodiment has an advantage that when the chain is connected to the key hole 20B of the engaging member 20A so as to engage the body 2 itself with the external fixed location, the cartridge HDD 14 is inhibited from being detached from the body 2.

Further, in said embodiment, the cover 2A was able to be easily removed as required by moving the slider 26 to the first position without causing the engaging member 20A to protrude from the body 2 by positioning the slider 26 to the third position. However, it will be appreciated that it is not necessarily required to provide the third position. In said embodiment, the cartridge HDD 14 was inhibited from being detached from the body 2 by preventing the cover 2A from being removed, however, it will be appreciated that a detachable instrument such as the cartridge HDD or the like may be inhibited from being detached from the body through a direct action on the instrument instead of preventing the cover from being removed. It will be appreciated also that the cover may be, or may not be removed from the body, that is, may be merely opened.

Further, in said embodiment, a detachable instrument was the cartridge HDD 14, but it will be appreciated that the present invention may be applied not only to a memory such as a cartridge FDD, a cartridge IC memory, a card memory, or the like, but also to an instrument such as a battery pack, a communication instrument, or the like, other than storage unit. An object of said embodiment is a notebook personal computer, but it will be appreciated that the present invention may be applied to a portable type of information processing apparatus other than notebook type, or to an information processing apparatus other than portable type.

Further, in said embodiment, the engaging member 20A forms one end of the plate 60 as a movable member, but it will be appreciated that the engaging member and the movable member may be different pieces of members. Still further, in said embodiment, the plate 60 linearly moves as a movable member, but it will be appreciated that it may move between the first position and the second position drawing a circular arc. Still yet further, in said embodiment, the engaging member 20A can be engaged with the external fixed location such that the engaging member 20A is pulled out of the body 2 so that it protrudes from the body 2, but it will be appreciate that the engaging member 20A may be engaged with the external fixed location such that it does not necessarily protrude from the body 2, and a chain or the like may be attached such that the engaging member does not protrude from the body 2. It will be appreciated also that one movable member may allow a plurality of instruments or a plurality of covers for a plurality of the instruments to be inhibited from being detached or opened.

## Claims

1. An information processing apparatus having a security device, comprising:
a body (2), wherein said body (2) includes an aperture for receiving a removable device (14); and
a movable member (60) operable from outside said body, movable between first (41) and second (42) positions, said movable member (60) including a hole (20B) within a portion of said movable member (60) for receiving an extraneous securing device:
characterised in that the apparatus further comprises a cover (2A) removably mounted over said aperture for closing an ejecting section (2E) for removing said removable device (14) from said body (2); and
wherein said movable member (60) allows said cover (2A) to be opened when said movable member (60) is at a first position (41) and inhibits said cover (2A) from being opened when said movable member (60) is at a second position (42), said hole (20B) in said movable member (60) being located such that if an extraneous securing device is received therein when said movable member is in said second position (42) then said movable member is prevented from releasing said removable cover (2A) as a result of being prevented from moving to said first position (41).

2. An information processing apparatus as claimed in claim 1, wherein said body (2) is capable of receiving a plurality of said removable devices (14) at least two of which are constructed so as to allow them to be detached or inhibit them from being detached from each body (2) by the operation of a common movable member (60).

3. An information processing apparatus as claimed in claim 1 wherein an engaging member (20A) including said hole (20B) is provided for use in engaging said body (2) with said external location.

4. An information processing apparatus as claimed in any preceding claim, said movable member (60) being such that it is not used for engaging said body (2) with an external location when said movable member (60) is at said first position (41) and such that it is used for engaging said body (2) with the external location when said movable member (60) is at said second position (42).

5. An information processing apparatus as claimed in any preceding claim, wherein said movable member (60) is constructed so that not only it is operable to inhibit said cover (2A) from being opened at a third position (43) between said first position (41) and said second position (42), but also said engaging member (20A) cannot be used for engaging said body (2) with the external location when said movable member (60) is at the third position (43).

6. An information processing apparatus as claimed in any preceding claim, wherein said removable device (14) is a storage unit.

## Patentansprüche

1. Informationsverarbeitungsgerät mit einer Sicherheitsvorrichtung, mit:
einem Gehäuse (2), wobei das Gehäuse (2) eine Öffnung zur Aufnahme einer entfernbaren Vorrichtung (14) aufweist; und
einem beweglichen Bauteil (60), das von außerhalb des Gehäuses her betätigbar und zwischen einer ersten (41) und einer zweiten Position (42) beweglich ist, wobei das bewegliche Bauteil (60) ein Loch (20B) zur Aufnahme einer außenliegenden Sicherungsvorrichtung in einem Abschnitt des beweglichen Bauteiles (60) enthält,
dadurch gekennzeichnet, daß das Gerät weiterhin eine Abdekkung (2A) aufweist, die entfernbar über der Öffnung angeordnet ist, um einen Auswurfabschnitt (2E) zur Entfernung der entfernbaren Vorrichtung (14) von dem Gehäuse (2) zu verschließen; und
wobei das bewegliche Bauteil (60) das Öffnen der Abdeckung (2A) erlaubt, wenn das bewegliche Bauteil (60) in einer ersten Position (41) ist und das Öffnen der Abdeckung (2A) sperrt, wenn das bewegliche Bauteil in einer zweiten Position (42) ist, wobei das Loch (20B) in dem beweglichen Bauteil (60) so angeordnet ist, daß, wenn eine außenliegende Sicherheitsvorrichtung hierin aufgenommen ist, wenn das bewegliche Bauteil in der zweiten Position (42) ist, dann das bewegliche Bauteil an einer Freigabe der Abdeckung (2A) gehindert ist, da es an einer Bewegung in die erste Position (41) gehindert ist.

2. Informationsverarbeitungsgerät nach Anspruch 1, wobei das Gehäuse (2) zur Aufnahme einer Mehrzahl der entfernbaren Vorrichtungen (14) ausgelegt ist, von denen wenigstens zwei so aufgebaut sind, daß sie durch Betätigung eines gemeinsamen beweglichen Bauteiles (60) von jedem Gehäuse (2) entfernt oder an einer Entfernung gehindert werden können.

3. Informationsverarbeitungsgerät nach Anspruch 1, wobei ein Eingriffsteil (20A) mit dem Loch (20B) zur Verwendung für einen Eingriff des Gehäuses (2) mit der externen Stelle vorgesehen ist.

4. Informationsverarbeitungsgerät nach einem der vorhergehenden Ansprüche, wobei das bewegliche Bauteil (60) so ausgelegt ist, daß es nicht für einen Eingriff des Gehäuses (2) mit einer externen Stelle verwendet wird, wenn das bewegliche Bauteil (60) in der ersten Position (41) ist und so ausgelegt ist, daß es für einen Eingriff des Gehäuses (2) mit der externen Stelle verwendet wird, wenn das bewegliche Bauteil (60) in der zweiten Position (42) ist.

5. Informationsverarbeitungsgerät nach einem der vorhergehenden Ansprüche, wobei das bewegliche Bauteil (60) so aufgebaut ist, daß es nicht nur betätigbar ist, um das Öffnen der Abdeckung (2A) in einer dritten Position (43) zwischen der ersten Position (41) und der zweiten Position (42) zu sperren, sondern auch das Eingriffsteil (20A) nicht für einen Eingriff des Gehäuses (2) mit der externen Stelle verwendbar ist, wenn das bewegliche Bauteil (60) in der dritten Position (43) ist.

6. Informationsverarbeitungsgerät nach einem der vorhergehenden Ansprüche, wobei die entfernbare Vorrichtung (14) eine Speichereinheit ist.

## Revendications

1. Appareil de traitement de l'information ayant un dispositif de sécurité, comprenant:
une coque (2), où ladite coque (2) comprend une ouverture pour recevoir un dispositif séparable (14); et
un membre déplaçable (60) pouvant être actionné depuis l'extérieur de ladite coque, se déplaçant entre une première (41) et une deuxième (42) positions, ledit membre déplaçable (60) comprenant un trou (20B) en un endroit pour recevoir un dispositif de sécurité rapporté;
caractérisé en ce que l'appareil comprend en outre un couvercle (2A) amovible monté au-dessus de ladite ouverture pour fermer une partie éjectable (2E) pour séparer ledit dispositif séparable (14) de ladite coque (2); et
où ledit membre déplaçable (60) permet d'ouvrir ledit couvercle (2A) quand ledit membre déplaçable (60) est dans une première position (41) et empêche l'ouverture dudit couvercle (2A) quand ledit membre déplaçable (60) est dans une deuxième position (42), ledit trou (20B) pratiqué dans ledit membre déplaçable (60) étant situé de manière à ce que si un dispositif de sécurité rapporté y est inséré quand ledit membre déplaçable se trouve dans ladite deuxième position (42), ledit membre déplaçable ne puisse alors déverrouiller ledit couvercle amovible (2A), ceci résultant du fait qu'il ne peut pas être placé dans ladite première position (41).

2. Appareil de traitement de l'information tel que revendiqué dans la revendication 1, où ladite coque (2) peut recevoir une pluralité desdits dispositifs séparables (14), au moins deux desquels sont construits de manière à ce qu'ils puissent être détachés ou à ce qu'ils ne puissent pas être détachés de chaque coque (2) en actionnant un membre déplaçable commun (60).

3. Appareil de traitement de l'information tel que revendiqué dans la revendication 1, où un membre d'enclenchement (20A) comprenant ledit trou (20B) est utilisé pour enclencher ladite coque (2) avec un point externe.

4. Appareil de traitement de l'information tel que revendiqué dans l'une quelconque des revendications précédentes, ledit membre déplaçable (60) étant tel qu'il n'est pas utilisé pour enclencher un point externe avec ladite coque (2) quand ledit membre déplaçable (60) se trouve dans ladite première position (41) et, tel qu'il est utilisé pour enclencher ladite coque (2) avec le point externe dans quand ledit membre déplaçable (60) se trouve dans ladite deuxième position (42).

5. Appareil de traitement de l'information tel que revendiqué dans l'une quelconque des revendications précédentes, où ledit membre déplaçable (60) est construit non seulement de manière à ce que actionnement empêche l'ouverture dudit couvercle (2A) à une troisième position (43) située entre ladite première (41) et ladite deuxième position (42), mais aussi de manière à ce que ledit membre d'enclenchement (20A) ne puisse pas servir à enclencher ladite coque (2) avec le point externe quand ledit membre déplaçable (60) se trouve dans ladite troisième position (43).

6. Appareil de traitement de l'information tel que revendiqué dans l'une quelconque des revendications précédentes, où ledit dispositif séparable (14) est une unité de mémoire.
